# EUROPEAN PATENT APPLICATION

(11) **EP 3 222 683 A1**
(43) Date of publication of application: **27.09.2017**
(21) Application number: 17161849.9
(22) Date of filing: 20.03.2017
(51) Int. Cl.: C09D 11/00, C09D 11/02, C09D 11/10, C09D 11/101, C09D 11/34, C09D 11/38

(54) **CURABLE GELLANT INK COMPOSITION**

(30) Priority: 23.03.2016 US 201615078323
(71) Applicant: Xerox Corporation, Rochester, NY 14644 (US)
(72) Inventor: CHOPRA, Naveen, Oakville Ontario L6H 5W4 (CA); MOORLAG, Carolyn, Mississauga Ontario L5G 4A7 (CA); BRETON, Marcel P., Mississauga Ontario L5K 2S6 (CA); KEOSHKERIAN, Barkev, Thornhill Ontario L4J 7E8 (CA); JIDDAWI, Saleh A., Mississauga Ontario L5M 0P5 (CA); SISLER, Gordon, St. Catharines Ontario L2R 6P7 (CA)
(74) Representative: Gill Jennings & Every LLP

(57) **Abstract**

A curable phase change gellant ink composition including a phase change ink vehicle comprising at least one acrylate monomer, oligomer, or prepolymer; acryloylmorpholine; at least one gellant, wherein the gellant is miscible with the phase change ink vehicle; a photoinitiator; and an optional colorant.

## Description

### BACKGROUND

Disclosed herein is an ink composition, in embodiments, a miscible gellant ink composition suitable for three-dimensional printing applications and having jettability, desired mechanical characteristics, and high resolution of printed images or three-dimensional objects printed therewith. More particularly disclosed is a curable phase change gellant ink composition comprising a phase change ink vehicle comprising at least one acrylate monomer, oligomer, or prepolymer; acryloylmorpholine; at least one gellant, wherein the gellant is miscible with the phase change ink vehicle; a photoinitiator; and an optional colorant.

In the "materials jetting" digital manufacturing process, more commonly called Multi-Jet Modelling (MJM), structural features are printed using curable inks such as ultra-violet radiation curable (UV-curable) inks. Jetted, UV-curable inks must maintain a nominal low viscosity at jetting which often limits the rheological behavior of the ink as it is laid down to make the object. Due to the limited rheology range, inks normally spread upon printing and limit achievable resolution. Recently, it was proposed to use Xerox® proprietary UV gel ink as a base material to print high resolution objects using multi-jet modeling.

U. S. Patent 8,916,084, which is hereby incorporated by reference herein in its entirety, describes in the Abstract thereof a method for fabricating a three-dimensional object including depositing a first amount of an ultraviolet curable phase change ink composition comprising an optional colorant and a phase change ink vehicle comprising a radiation curable monomer or prepolymer, a photoinitiator, a reactive wax, and a gellant upon a print region surface; successively depositing additional amounts of the ultraviolet curable phase change ink composition to create a three-dimensional object; and curing the ultraviolet curable phase change ink composition.

U. S. Patent 8,940,935, which is hereby incorporated by reference herein in its entirety, describes in the Abstract thereof a bis-urea gelator having the structure of Formula I 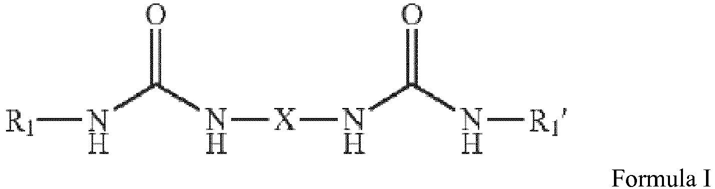 wherein R and R' each, independently of the other, is a saturated aliphatic hydrocarbon group selected from the group consisting of (1) linear aliphatic groups, (2) branched aliphatic groups, (3) cyclic aliphatic groups, (4) aliphatic groups containing both cyclic and acyclic portions, any carbon atom of the saturated aliphatic hydrocarbon group may be optionally substituted with an alkyl group (cyclic or acyclic), wherein (1) and (2) groups have a carbon number of from about 1 to about 22 carbon atoms, and wherein (3) and (4) groups have a carbon number of from about 4 to about 10 carbons; and X is selected from the group consisting of: (i) an alkylene group, (ii) an arylene group, (iii) an arylalkylene group, and (iv) an alkylarylene group.

U. S. Patent 9,006,478, which is hereby incorporated by reference herein in its entirety, describes in the Abstract thereof a diurethane gelator having the structure of Formula I 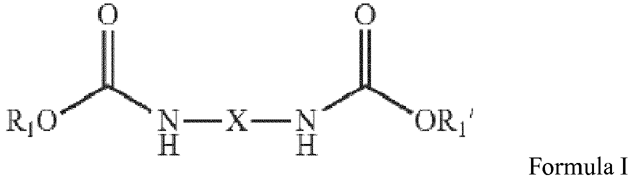 wherein R₁ and R_{1'} each, independently of the other, is a C1-C22 saturated aliphatic hydrocarbon group selected from the group consisting of (1) linear aliphatic groups, (2) branched aliphatic groups, (3) cyclic aliphatic groups, (4) aliphatic groups containing both cyclic and acyclic portions, any carbon atom of the saturated aliphatic hydrocarbon group may be optionally substituted with an alkyl group (cyclic or acyclic), wherein (1) and (2) groups have a carbon number of from about 1 to about 22 carbons, and wherein (3) and (4) groups have a carbon number of from about 4 to about 10 carbons; and X is selected from the group consisting of: (i) an alkylene group, (ii) an arylene group, (iii) an arylalkylene group, (iv) an alkylarylene group.

U. S. Patent 8,882,256, which is hereby incorporated by reference herein in its entirety, describes in the Abstract thereof curable solid inks which are solid at room temperature and molten at an elevated temperature at which the molten ink is applied to a substrate. In particular, the curable solid inks comprise low molecular weight amide gellants that impart self-leveling capabilities to the inks. Also disclosed are methods for making the amide gellant and the inks comprising the amide gellants.

However, gellants are not necessarily miscible with photopolymerizable base components (required for gel strength) and certain existing two-dimensional UV gel ink formulations printed as 3D objects did not always achieve desired mechanical properties for a functional object.

In the Multi-Jet Modelling (MJM) process, a formulation containing liquid monomer is jetted onto a substrate layer by layer, interspersed with a curing step by radiation, such as ultra-violet (UV) light. Thus, the three-dimensional object is built up over time. The UV curable materials for MJM are available in a wide variety of physical characteristics (e.g., tensile strength, tensile modulus, flexural strength, and the like), but can be limited in achievable resolution that can be obtained. One way to improve resolution is to decrease drop size of the ink; however, this strategy can seriously impact throughput, for a system that is already considered to be slow compared to a production process such as injection molding of plastics.

The Multi-Jet Modeling (MJM) additive manufacturing process has been used to print structural features with conventional UV curable inks. This approach has been used, for example, to print clear glass-like, transparent and/or colored objects. However, the fidelity of vertical edges and fine features can be compromised by drop spreading of necessarily low viscosity (such as about 10 centipoise) jettable inks. Recently, it was proposed to use Xerox® proprietary UV gel ink as a build material to print objects using multi-jet modeling.

UV-gel inks, by virtue of gel induced phase change transition at a temperature below the gel point, have the inherent ability to limit spreading upon printing. However, existing two-dimensional ink formulations have in some cases exhibited shortfalls for printing functional objects. Several early iterations of these material versions were brittle and lacked desired mechanical robustness.

Thus, while previous ink compositions are suitable for their intended purpose, it is desired to have new ink designs, in embodiments new photocurable ink compositions, to achieve both high resolution and functional properties. Further desired are ink compositions providing gellant components and curable components that are miscible. Still further desired are ink compositions comprising miscible gellant and curable components which ink compositions provide high gel strength.

The appropriate components and process aspects of the each of the foregoing U. S. Patents and Patent Publications may be selected for the present disclosure in embodiments thereof. Further, throughout this application, various publications, patents, and published patent applications are referred to by an identifying citation. The disclosures of the publications, patents, and published patent applications referenced in this application are hereby incorporated by reference into the present disclosure to more fully describe the state of the art to which this invention pertains.

### SUMMARY

Described is a curable phase change gellant ink composition comprising a phase change ink vehicle comprising at least one acrylate monomer, oligomer, or prepolymer; acryloylmorpholine; at least one gellant, wherein the gellant is miscible with the phase change ink vehicle; a photoinitiator; and an optional colorant.

Also described is a method for fabricating a three-dimensional object comprising depositing a first amount of a curable phase change gellant ink composition comprising a curable phase change gellant ink composition including a phase change ink vehicle comprising at least one acrylate monomer, oligomer, or prepolymer; acryloylmorpholine; at least one gellant, wherein the gellant is miscible with the phase change ink vehicle; a photoinitiator; and an optional colorant, upon a print region surface; successively depositing additional amounts of the ink composition to create a three-dimensional object; and curing the ultraviolet curable phase change ink composition.

Further described is a method for preparing a curable phase change gellant ink composition comprising combining a phase change ink vehicle comprising at least one acrylate monomer, oligomer, or prepolymer; acryloylmorpholine; at least one gellant, wherein the gellant is miscible with the phase change ink vehicle; a photoinitiator; and an optional colorant.

### BRIEF DESCRIPTION OF THE DRAWINGS

Figure 1 is a graph showing complex viscosity (y-axis, centipoise) versus temperature (x-axis, °C) for low molecular weight gellant inks at various gellant loadings.
Figure 2 is a graph showing complex viscosity (y-axis, centipoise) versus temperature (x-axis, °C) for standard molecular weight gellant inks at various gellant loadings.
Figure 3 is a graph showing complex viscosity (y-axis, centipoise) versus temperature (x-axis, °C) for high molecular weight gellant inks at various gellant loadings.
Figure 4 is an illustration of a printed gellant ink in accordance with the present embodiments showing a positive image (lines).
Figure 5 is an illustration of a printed gellant ink in accordance with the present embodiments showing a negative image (holes).

### DETAILED DESCRIPTION

A new ink design is provided to achieve suitable properties for printing three-dimensional objects including jettability, functional mechanical properties and high resolution. Ink formulations are described containing radiation curable components, in embodiments, ultra-violet (UV) radiation curable components, which are miscible with selected gellants. In embodiments, monomers and oligomers are selected for 3D printed inks such that the selection of the molecular weight fraction of the gellant enables complete miscibility of the gellant. The resulting three-dimensional inks demonstrate a temperature induced phase change rheological profile. In embodiments, gellant content is between from about 5 weight percent to about 25 weight percent, by weight, based upon the total weight of the ink composition, and the gellant combinations are miscible with the base ink components. The resulting ink formulations demonstrate jettability and thermomechanical properties according to requirements for three-dimensional printing and post processing. Finally, higher resolution of fine features is clearly demonstrated compared with commercial non-gel containing three-dimensional ink, attributed to the rheological profile induced by a gel transition at temperatures below the gel point.

An ink composition herein comprises radiation curable, in embodiments, ultra-violet (UV) radiation curable, components suitable for printing three-dimensional objects, and gellants, wherein the radiation curable components are miscible with the gellants. The resulting ink compositions demonstrate a temperature induced phase change rheological profile. The ink compositions are particularly suitable for printing three-dimensional objects. In embodiments, the ink compositions contain acryloylmorpholine, or a mixture of acryloylmorpholine monomers, other acrylates, various acrylate oligomers (for example, urethane, epoxy, phenoxy, and the like) ranging from low to high viscosity, gellants, and photoinitiators. In embodiments, the gellant is present in the ink composition in an amount of from about 5 percent to about 25 percent, by weight, based upon the total weight of the ink composition, and the gellant or combinations of gellants described are miscible with base ink components. The gel point of the ink can be fine-tuned by the appropriate selection of the molecular weight of the gellant used, as well as the loading level. Resulting ink formulations demonstrate jettability and thermomechanical properties according to requirements for three-dimensional printing and post processing. Finally, higher resolution of fine features is clearly demonstrated compared with commercial non-gel containing three-dimensional ink, attributed to the rheological profile induced by a gel transition at temperatures below the gel point.

In embodiments, a curable phase change gellant ink composition comprises a phase change ink vehicle comprising at least one acrylate monomer, oligomer, or prepolymer; at least one gellant, wherein the gellant is miscible with the phase change ink vehicle; a photoinitiator; and an optional colorant. In certain embodiments, a curable phase change gellant ink composition comprises a phase change ink vehicle comprising at least one acrylate monomer, oligomer, or prepolymer; acryloylmorpholine, at least one gellant, wherein the gellant is miscible with the phase change ink vehicle; a photoinitiator; and an optional colorant.

### Gellant.

Any suitable or desired gellant can be selected for the ink compositions herein provided that the gellant is miscible with the phase change vehicle components.

As used herein a low molecular weight gellant is a gellant having a weight average molecular weight (Mw) of from about 1,000 to about 2,500 grams per mole, or from about 1,200 to about 2,200 grams per mole, or from about 1,500 to about 2,000 grams per mole, as measured by gel permeation chromatography (GPC) relative to polystyrene standards.

In embodiments, the ink compositions herein can comprise a combination of low molecular weight gellant, standard molecular weight gellant, and high molecular weight gellant.

In certain embodiments, the gellant is a low molecular weight gellant having a weight average molecular weight of from about 1,000 to about 2,500 grams per mole, or from about 1,200 to about 2,200 grams per mole, or from about 1,500 to about 2,000 grams per mole, as measured by gel permeation chromatography (GPC) relative to polystyrene standards. In a particular embodiment, the gellant is a low molecular weight gellant having a weight average molecular weight of from about 1,000 to about 1,500 grams per mole, as measured by gel permeation chromatography (GPC) relative to polystyrene standards.

In certain embodiments, the ink composition comprises a phase change ink vehicle comprising at least one acrylate monomer, oligomer, or prepolymer; acryloylmorpholine, at least one gellant, wherein the gellant is miscible with the phase change ink vehicle; a photoinitiator; and an optional colorant; wherein the at least one gellant is a low molecular weight gellant having a weight average molecular weight of from about 1,000 to about 2,500 grams per mole, or from about 1,200 to about 2,200 grams per mole, or from about 1,500 to about 2,000 grams per mole, or from about 1,000 to about 1,500 grams per mole, as measured by gel permeation chromatography (GPC) relative to polystyrene standards.

In embodiments, the gellant is a low molecular weight amide gellant as described in U. S. Patent 8,882,256, which is hereby incorporated by reference herein in its entirety. In embodiments, the gellant is a compound of the formula 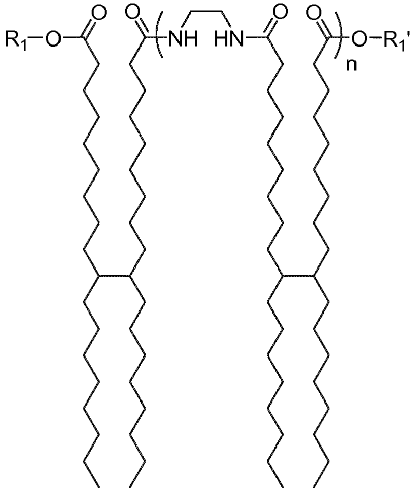 where n is about 0 to about 20, about 0 to about 15, or about 0 to about 10, and where R1 and R1' each, independently of the other, is a suitable end-capping group (e.g., an alcohol, aromatic, or aromatic alcohol group). In some embodiments, n is 1, 2, 3, 4, 5, 6, 7, 8, 9, 10, 11, 12, 13, 14, 15, 16, 17, 18, 19, or 20. In embodiments, the amide gellant of the present embodiments has a weight average molecular weight (Mw) of from about 800 to about 2,500, or from about 900 to about 2,400, or from about 1,000 to about 2,300. In embodiments, the amide gellant of the present embodiments has a number average molecular weight (Mn) of from about 500 to about 2,500, or from about 700 to about 2,300, or from about 900 to about 1,700.

In embodiments, R1 and R1' can be the same or different, and wherein R1 and R1' are each, independently of the other, selected from the group consisting of 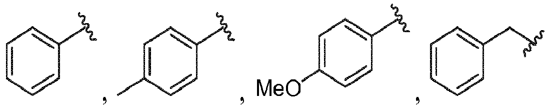 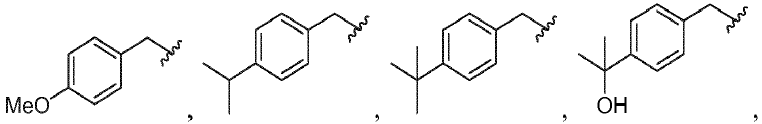 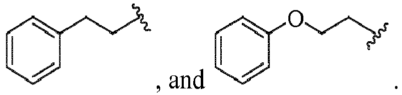 wherein the wavy line represents the attachment to the main structure.

The gellant compounds as disclosed herein can be prepared by any desired or effective method.

For example, in embodiments, gellants can be prepared as described in U. S. Patent 7,259,275, entitled "Method for Preparing Curable Amide Gellant Compounds," with the named inventors Jennifer L. Belelie, Adela Goredema, Peter G. Odell, and Eniko Toma, and the disclosure of which is totally incorporated herein by reference, which describes a process for preparing a compound of the formula 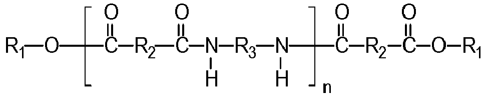 wherein R₁ is an alkyl group having at least one ethylenic unsaturation, an arylalkyl group having at least one ethylenic unsaturation, or an alkylaryl group having at least one ethylenic unsaturation, R₂ and R₃ each, independently of the others, are alkylene groups, arylene groups, arylalkylene groups, or alkylarylene groups, and n is an integer representing the number of repeat amide units and is at least 1, said process comprising: (a) reacting a diacid of the formula

HOOC-R₂-COOH

with a diamine of the formula 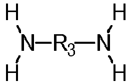 in the absence of a solvent while removing water from the reaction mixture to form an acid-terminated oligoamide intermediate; and (b) reacting the acid-terminated oligoamide intermediate with a monoalcohol of the formula

R₁-OH

in the presence of a coupling agent and a catalyst to form the product.

In embodiments, the amide gellant compounds of the present embodiments are made from a two-step process. In the first step, an amide gellant precursor (organoamide) is synthesized by using two equivalents of Pripol™ (available from Croda Inc. (Edison, New Jersey)) and one equivalent of ethylenediamine (EDA), as shown in the scheme below. 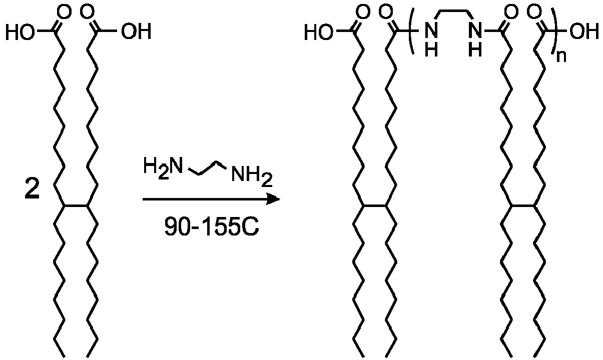 where n may be 0 to about 20, about 0 to about 15, or about 0 to about 10.

In the second step, the organoamide is end-capped with various end cap alcohols to make the esters. During the preparation of the organoamide, oligomers or x-mers of the ester-terminated polyamide gellant are created (end-capping to make the esters in the final gellant does not change the oligomer distribution).

From the two-step process, there is achieved gellant compositions that comprise a blend of oligomers or x-mers of an ester-terminated polyamide gellant disclosed herein. The blend oligomers or x-mers may include monomers or unimers, thus as used herein, the term "oligomer" or "x-mer" includes monomers or unimers in addition to molecules that consist of a plurality of monomers such as dimers, trimers, tetramers, pentamers, etc. The oligomeric amide gellant composition comprise discrete ranges of oligomers (also referred to as "x-mers") that provide optimal gel point and room temperature viscosity to facilitate stable jetting and controlled showthrough of the printed inks.

In some embodiments, the gellant oligomer mixture composition comprises a blend of oligomers made up of two or more (e.g. 2, 3, 4, 5, 6, 7, 8, 9, 10, 11, 12, or more) of the following in any combination or mixture: a unimer, a dimer, a trimer, a tetramer, a pentamer, a hexamer, a heptamer, a octamer, a nonamer, a decamer, an undecamer, and a dodecamer.

In some embodiments, the proportion of each oligomer in the oligomeric mixture is equimolar. In some embodiments, the oligomeric mixture comprises more than one and up to 20 x-mers, wherein x is from about 1 to about 12, and the x-mer may be as described above, including a unimer, dimer, trimer and the like as listed above up to and including a dodecamer. The proportion of any of the x-mers present in the oligomeric mixture may be from about 0.5 percent to about 50 percent, between about 10 percent to about 50 percent, and between about 20 percent to about 50 percent.

By controlling the amount of EDA used in the first step, for example, reducing the amount of EDA used relative to the amount of Pripol™, the distribution can be shifted to create larger proportions of the lower order x-mers (smaller values of repeat units n). Typically, the amount of EDA relative to the amount of Pripol™ is expressed as an EDA:Pripol™ mole ratio. In embodiments, the EDA:Pripol™ ratio used in synthesizing the amide gellant precursor is modified by reducing from the original EDA:Pripol™ ratio of 1.1:2 down to from about 0.9:2 to about 0.05:2, or to from about 0.8:2 to about 0.10:2, or to from about 0.75:2 to about 0.25:2. In such embodiments, the composition of the low molecular weight amide gellant mixture as an x-mer composition that has higher proportions of the n=0 (unimer), n=1 (dimer), n=2 (trimer) species. In specific embodiments the low molecular weight amide gellant contains between 30-60% of the n=1 (dimer) species, and the sum of n=0 (unimer), n=1 (dimer), and n=2 (trimer) comprises at least 80% of the total composition, as measured by Matrix-assisted laser desorption/ionisation-time of flight **(MALDI-TOF)** mass spectrometry.

In embodiments, the molecular weight fraction of the gellant is selected based on the monomers and oligomers selected for 3D printed inks to enable complete miscibility of the gellant.

In embodiments, the low molecular weight gellant herein comprises gellant prepared with an EDA:Pripol™ range of from 0.25:2 to 0.75:2, and has the following properties:

Sum of higher order x-mers (n=4, 5, 6) is less than 5 percent, in embodiments, from about 0.1 to about 5 percent, or from about 0.5 to about 4 percent, or from about 1 to about 3 percent; based on the total amount of x-mer species in the low molecular weight gellant;

and wherein, in embodiments, the n=1 dimer is present in an amount of from about 30 to about 60 percent, or from about 35 to about 55 percent, or from about 40 to about 50 percent, based on the total amount of x-mer species; that is, the total of n=0 (unimer), n=1 (dimer), n=2 (trimer) species, and, if present, any n=4, 5, 6 (higher order x-mer species).

In embodiments, the low molecular weight gellant comprises a mixture of x-mer species selected from the group consisting of unimer species (n=0), dimer species (n=1), trimer species (n=2), and higher order x-mer species (n=4, 5, 6), wherein the dimer species is present in an amount of from about 30 to about 60 percent, and the higher order x-mer species is present in an amount of less than 5 percent, based on the total amount of x-mer species.

In embodiments, the gellant comprises a low molecular weight gellant comprising a mixture of x-mer species selected from the group consisting of unimer species, dimer species, trimer species, and higher order x-mer species, and wherein the higher order x-mer species are present in an amount of less than 1.5 percent, based on the total amount of x-mer species.

In embodiments, the medium molecular weight gellant herein comprises gellant prepared with an EDA:Pripol™ range of from 1.1:2 to 1.125:2, and has the following properties:
Sum of higher order x-mers (n=4, 5, 6) is about 5 percent to about 6 percent, or ranges in between 5 percent to 6 percent; based on the total amount of x-mer species in the medium molecular weight gellant;
and wherein, in embodiments, the n=1 dimer is present in an amount of from about 25 to about 30 percent, or in an amount comprising any range between 25 to 30 percent, based on the total amount of x-mer species.

In embodiments, the high molecular weight gellant herein comprises gellant prepared with an EDA:Pripol™ range of from 1.3:2 to 1.5:2, and has the following properties:
Sum of higher order x-mers (n=4, 5, 6) is greater than about 7 percent, or is 7 percent to 12 percent, or 8 percent to 11 percent, or 9 percent to 10 percent, based on the total amount of x-mer species in the high molecular weight gellant; and
wherein, in embodiments, the n=1 dimer is present in an amount of about 20 to about 25 percent, or any range between 20 to 25 percent, based on the total amount of x-mer species.

In embodiments, the low molecular weight gellant herein has very little higher order x-mers (n=4, 5, 6) present, in embodiments, the low molecular weight gellant has less than 1.5 percent higher order x-mers (n=4, 5, 6) present, based on the total amount of x-mer species.

In embodiments, the high molecular weight gellant has from 8 to 10 percent higher order x-mers (n=4, 5, 6), based on the total amount of x-mer species.

In embodiments, the standard molecular weight gellant has an amount of higher order x-mers (n=4, 5, 6) that lies in between the range present in the low molecular weight gellant and the range present in the high molecular weight gellant. In embodiments, the standard molecular weight gellant has greater than 1.5 percent higher order x-mers (n=4, 5, 6) to less than 8 percent higher order x-mers (n=4, 5, 6), based on the total amount of x-mer species.

In embodiments, the n=1 (dimer) does not exceed 25 percent of the total composition for the standard molecular weight gellant. In embodiments, the n=1 (dimer) does not exceed 25 percent of the total composition for the high molecular weight gellant. In embodiments, the low molecular weight gellant comprises from about 35 percent to about 55 percent of n=1 (dimer).

The gellant can be present in the ink composition in any suitable or desired amount. In embodiments, the gellant is present in an amount of from about 5 to about 25, or from about 7.5 to about 20, or from about 10 to about 15 percent, by weight, based upon the total weight of the ink composition. In embodiments, the gellant is present in an amount of from about 5 to about 25 percent by weight based upon the total weight of the ink composition.

### Acrylate Monomer, Oligomer, or Prepolymer.

Any suitable or desired acrylate monomer, oligomer, or prepolymer can be selected for embodiments herein. In embodiments, the phase change ink vehicle comprises acryloylmorpholine. In embodiments, the phase change ink comprises a mixture of acrylate and acryloylmorpholine monomers, various acrylate oligomers such as urethane acrylate, epoxy acrylate, phenoxy acrylate, and the like, ranging from high to low viscosity.

Examples of suitable materials include radiation curable monomer compounds, such as acrylate and methacrylate monomer compounds, which are suitable for use as phase change ink carriers. Specific examples of relatively nonpolar acrylate and methacrylate monomers include (but are not limited to) lauryl acrylate, lauryl methacrylate, isodecylacrylate, isodecylmethacrylate, caprolactone acrylate, 2-phenoxyethyl acrylate, isooctylacrylate, isooctylmethacrylate, butyl acrylate, and the like, as well as mixtures and combinations thereof. In addition, multifunctional acrylate and methacrylate monomers and oligomers can be included in the phase change ink carrier as reactive diluents and as materials that can increase the crosslink density of the cured image, thereby enhancing the toughness of the cured images. Different monomer and oligomers can also be added to tune the plasticity or elasticity of the cured objects. Examples of suitable multifunctional acrylate and methacrylate monomers and oligomers include (but are not limited to) pentaerythritol tetraacrylate, pentaerythritol tetramethacrylate, 1,2-ethylene glycol diacrylate, 1,2-ethylene glycol dimethacrylate, 1,6-hexanediol diacrylate, 1,6-hexanediol dimethacrylate, 1,12-dodecanol diacrylate, 1,12-dodecanol dimethacrylate, tris(2-hydroxy ethyl) isocyanurate triacrylate, propoxylated neopentyl glycol diacrylate (available from Sartomer Co. Inc. as SR 9003), hexanediol diacrylate, tripropylene glycol diacrylate, dipropylene glycol diacrylate, amine modified polyether acrylates (available as PO 83 F, LR 8869, and/or LR 8889 (all available from BASF Corporation), trimethylolpropane triacrylate, glycerol propoxylate triacrylate, dipentaerythritol pentaacrylate, dipentaerythritol hexaacrylate, ethoxylated pentaerythritol tetraacrylate (available from Sartomer Co. Inc. as SR 494), and the like, as well as mixtures and combinations thereof.

In embodiments, the at least one acrylate monomer, oligomer, or prepolymer is selected from the group consisting of trifunctional aliphatic urethane acrylate oligomer, epoxy acrylate, 2-phenoxy ethyl acrylate, acrylate, propoxylated glyceryl triacrylate, triethylene glycol diacrylate, tetraethylene glycol diacrylate, and combinations thereof.

In embodiments, the phase change ink vehicle comprises at least one triacrylate, at least one monoacrylate, and at least one diacrylate; and the ratio of triacrylate to monoacrylate and diacrylate is from about 0.05 to about 0.5, or from about 0.07 to about 0.4, or from about 0.1 to about 0.3.

In further embodiments, the ink composition comprises a mixture of at least five acrylates selected from triacrylate, monoacrylate, and diacrylate; and wherein the ratio of triacrylate to monoacrylate and diacrylate is from about 0.05 to about 0.5, or from about 0.07 to about 0.4, or from about 0.1 to about 0.3. That is, the ratio of triacrylate to the sum of the mono - and diacrylate.

In further embodiments, the at least one acrylate monomer, oligomer, or prepolymer comprises a triacrylate, and the ratio of gellant to triacrylate is from about 0.8 to about 4, or from about 0.6 to about 2, or from about 0.5 to about 1.5.

### Photoinitiator.

The ink compositions disclosed herein can comprise any suitable photoinitiator. Examples of specific initiators include, but are not limited to, Irgacure® 127, Irgacure® 379, and Irgacure® 819, all commercially available from Ciba Specialty Chemicals, among others. Further examples of suitable initiators include (but are not limited to) benzophenones, benzyl ketones, monomeric hydroxyl ketones, polymeric hydroxyl ketones, α-alkoxy benzyl ketones, α-amino ketones, acyl phosphine oxides, metallocenes, benzoin ethers, benzil ketals, α-hydroxyalkylphenones, α-aminoalkylphenones, acylphosphine photoinitiators sold under the trade designations of IRGACURE and DAROCUR from Ciba, and the like. Specific examples include 1-hydroxy-cyclohexylphenylketone, benzophenone, 2-benzyl-2-(dimethylamino)-1-(4-(4-morphorlinyl)phenyl)-1-butanone, 2-methyl-1-(4-methylthio)phenyl-2-(4-morphorlinyl)-1-propanone, diphenyl-(2,4,6-trimethylbenzoyl) phosphine oxide, phenyl bis(2,4,6-trimethylbenzoyl) phosphine oxide, benzyl-dimethylketal, isopropylthioxanthone, 2,4,6-trimethylbenzoyldiphenylphosphine oxide (available as BASF LUCIRIN TPO), 2,4,6-trimethylbenzoylethoxyphenylphosphine oxide (available as BASF LUCIRIN TPO-L), bis(2,4,6-trimethylbenzoyl)-phenylphosphine oxide (available as Ciba IRGACURE 819) and other acyl phosphines, 2-methyl-1-(4-methylthio)phenyl-2-(4-morphorlinyl)-1-propanone (available as Ciba IRGACURE 907) and 1-(4-(2-hydroxyethoxy)phenyl)-2-hydroxy-2-methylpropan-1-one (available as Ciba IRGACURE 2959), 2-benzyl 2-dimethylamino 1-(4-morpholinophenyl) butanone-1 (available as Ciba IRGACURE 369), 2-hydroxy-1-(4-(4-(2-hydroxy-2-methylpropionyl)-benzyl)-phenyl)-2-methylpropan-1-one (available as Ciba IRGACURE 127), 2-dimethylamino-2-(4-methylbenzyl)-1-(4-morpholin-4-ylphenyl)-butanone (available as Ciba IRGACURE 379), titanocenes, isopropylthioxanthone, 1-hydroxy-cyclohexylphenylketone, benzophenone, 2,4,6-trimethylbenzophenone, 4-methylbenzophenone, diphenyl-(2,4,6-trimethylbenzoyl) phosphine oxide, 2,4,6-trimethylbenzoylphenylphosphinic acid ethyl ester, oligo(2-hydroxy-2-methyl-1-(4-(1-methylvinyl)phenyl) propanone), 2-hydroxy-2-methyl-1-phenyl-1-propanone, benzyl-dimethylketal, and the like, as well as mixtures thereof.

In embodiments, the photoinitiator is selected from the group consisting of benzyl ketones, monomeric hydroxyl ketones, α-alkoxy benzyl ketones, α-amino ketones, acyl phosphine oxides, metallocenes, benzophenone, benzophenone derivatives, isopropyl thioxanthenones, arylsulphonium salts and aryl iodonium salts.

Optionally, the phase change inks can also contain an amine synergist, which are co-initiators which can donate a hydrogen atom to a photoinitiator and thereby form a radical species that initiates polymerization, and can also consume dissolved oxygen, which inhibits free-radical polymerization, thereby increasing the speed of polymerization. Examples of suitable amine synergists include (but are not limited to) ethyl-4-dimethylaminobenzoate, 2-ethylhexyl-4-dimethylaminobenzoate, and the like, as well as mixtures thereof.

Initiators for inks disclosed herein can absorb radiation at any desired or effective wavelength, in one embodiment at least about 200 nanometers, and in one embodiment no more than about 560 nanometers, and in another embodiment no more than about 420 nanometers, although the wavelength can be outside of these ranges.

Optionally, the photoinitiator is present in the phase change ink in any desired or effective amount, in one embodiment at least about 0.5 percent by weight of the ink composition, and in another embodiment at least about 1 percent by weight of the ink composition, and in one embodiment no more than about 15 percent by weight of the ink composition, and in another embodiment no more than about 10 percent by weight of the ink composition, although the amount can be outside of these ranges.

### Colorant.

In embodiments, the ink herein optionally comprises a colorant. Any desired or effective colorant can be employed, including dyes, pigments, mixtures thereof, and the like, provided that the colorant can be dissolved or dispersed in the ink vehicle. Examples of suitable dyes include, but are not limited to, Usharect Blue 86 (Direct Blue 86), available from Ushanti Colour; Intralite Turquoise 8GL (Direct Blue 86), available from Classic Dyestuffs; Chemictive Brilliant Red 7BH (Reactive Red 4), available from Chemiequip; Levafix Black EB, available from Bayer; Reactron Red H8B (Reactive Red 31), available from Atlas Dye-Chem; D&C Red #28 (Acid Red 92), available from Warner-Jenkinson; Direct Brilliant Pink B, available from Global Colors; Acid Tartrazine, available from Metrochem Industries; Cartasol Yellow 6GF, available from Clariant; Carta Blue 2GL, available from Clariant; solvent dyes, including spirit soluble dyes such as Neozapon Red 492 (BASF); Orasol Red G (BASF); Direct Brilliant Pink B (Global Colors); Aizen Spilon Red C-BH (Hodogaya Chemical); Kayanol Red 3BL (Nippon Kayaku); Spirit Fast Yellow 3G; Aizen Spilon Yellow C-GNH (Hodogaya Chemical); Cartasol Brilliant Yellow 4GF (Clariant); Pergasol Yellow CGP (BASF); Orasol Black RLP (Ciba); Savinyl Black RLS (Clariant); Morfast Black Conc. A (Rohm and Haas); Orasol Blue GN (BASF); Savinyl Blue GLS (Sandoz); Luxol Fast Blue MBSN (Pylam); Sevron Blue 5GMF (Classic Dyestuffs); Basacid Blue 750 (BASF); Neozapon Black X51 [C.I. Solvent Black, C.I. 12195] (BASF); Sudan Blue 670 [C.I. 61554] (BASF); Sudan Yellow 146 [C.I. 12700] (BASF); Sudan Red 462 [C.I. 260501] (BASF); and the like, as well as mixtures thereof.

Examples of suitable pigments include PALIOGEN® Violet 5100 (BASF); PALIOGEN® Violet 5890 (BASF); HELIOGEN® Green L8730 (BASF); LITHOL® Scarlet D3700 (BASF); SUNFAST® Blue 15:4 (Sun Chemical); Hostaperm® Blue B2G-D (Clariant); Permanent Red P-F7RK; Hostaperm® Violet BL (Clariant); Permanent Rubine L5B 01 (Clairant); LITHOL® Scarlet 4440 (BASF); Bon Red® C (Dominion Color Company); ORACET® Pink RF (BASF); PALIOGEN® Red 3871 K (BASF); SUNFAST® Blue 15:3 and SUNFAST® 15:4 (Sun Chemical); PALIOGEN® Red 3340 (BASF); SUNFAST® Carbazole Violet 23 (Sun Chemical); LITHOL® Fast Scarlet L4300 (BASF); SUNBRITE® Yellow 17 (Sun Chemical); HELIOGEN® Blue L6900, L7020 (BASF); SUNBRITE® Yellow 74 (Sun Chemical); SPECTRA PAC® C Orange 16 (Sun Chemical); HELIOGEN® Blue K6902, K6910 (BASF); SUNFAST® Magenta 122 (Sun Chemical); HELIOGEN® Blue D6840, D7080 (BASF); Sudan Blue OS (BASF); NEOPEN® Blue FF4012 (BASF); PV Fast Blue B2GO1 (Clariant); IRGALITE® Blue BCA (BASF); PALIOGEN® Blue 6470 (BASF); Sudan Orange G (Aldrich), Sudan Orange 220 (BASF); PALIOGEN® Orange 3040 (BASF); PALIOGEN® Yellow 152, 1560 (BASF); LITHOL® Fast Yellow 0991 K (BASF); PALIOTOL® Yellow 1840 (BASF); NOVOPERM® Yellow FGL and NOVOPERM® Yellow P-HG (Clariant); Lumogen® Yellow D0790 (BASF); Suco-Yellow L1250 (BASF); Suco-Yellow D1355 (BASF); Suco Fast Yellow D1 355, D1 351 (BASF); HOSTAPERM® Pink E 02 (Clariant); Hansa Brilliant Yellow 5GX03 (Clariant); Permanent Yellow GRL 02 (Clariant); Permanent Rubine L6B 05 (Clariant); FANAL Pink D4830 (BASF); CINQUASIA® Magenta (DU PONT); PALIOGEN® Black L0084 (BASF); Pigment Black K801 (BASF); and carbon blacks such as REGAL 330™ (Cabot), Carbon Black 5250, Carbon Black 5750 (Columbia Chemical), Mogul® E (Cabot), and the like, as well as mixtures thereof.

The colorant is present in the phase change ink in any desired or effective amount to obtain the desired color or hue, in embodiments from about 0.1 percent to about 15 percent by weight of the ink, or from about 0.2 percent to about 8 percent by weight of the ink, although the amount can be outside of these ranges.

In embodiments, the inks herein are free of colorant. In embodiments, the inks herein are free of colorant and comprise clear ink.

### Antioxidant and Optional Additives.

The radiation curable phase change gellant inks herein can also optionally contain an antioxidant. The optional antioxidants can protect the images from oxidation and can also protect the ink components from oxidation during the heating portion of the ink preparation process. Specific examples of suitable antioxidant stabilizers include (but are not limited to) NAUGARD® 524, NAUGARD® 635, NAUGARD® A, NAUGARD® I-403, and NAUGARD® 959, commercially available from Crompton Corporation, Middlebury, CT; IRGANOX® 1010 and IRGASTAB® UV 10, commercially available from Ciba Specialty Chemicals; GENORAD 16 and GENORAD 40 commercially available from Rahn AG, Zurich, Switzerland, and the like, as well as mixtures thereof. When present, the optional antioxidant is present in the ink in any desired or effective amount, in one embodiment at least about 0.01 percent by weight of the ink carrier, in another embodiment at least about 0.1 percent by weight of the ink carrier, and in yet another embodiment at least about 1 percent by weight of the ink carrier, and in one embodiment no more than about 20 percent by weight of the ink carrier, in another embodiment no more than about 5 percent by weight of the ink carrier, and in yet another embodiment no more than about 3 percent by weight of the ink carrier, although the amount can be outside of these ranges.

The radiation curable phase change gellant inks can also, if desired, contain additives to take advantage of the known functionality associated with such additives. Such additives may include, for example, defoamers, slip and leveling agents, pigment dispersants, surfactants, and the like, as well as mixtures thereof. The inks can also include additional monomeric or polymeric materials as desired.

Curing of the ink can be effected by exposure of the ink image to actinic radiation at any desired or effective wavelength, in one embodiment at least about 200 nanometers, and one embodiment no more than about 480 nanometers, although the wavelength can be outside of these ranges. Exposure to actinic radiation can be for any desired or effective period of time, in one embodiment for at least about 0.2 second, in another embodiment for at least about 1 second, and in yet another embodiment for at least about 5 seconds, and in one embodiment for no more than about 30 seconds, and in another embodiment for no more than about 15 seconds, although the exposure period can be outside of these ranges. By curing is meant that the curable compounds in the ink undergo an increase in molecular weight upon exposure to actinic radiation, such as (but not limited to) crosslinking, chain lengthening, or the like.

In embodiments, a method for fabricating a three-dimensional object comprises depositing a first amount of a curable phase change gellant ink composition comprising a phase change ink vehicle comprising at least one acrylate monomer, oligomer, or prepolymer; at least one gellant, wherein the gellant is miscible with the phase change ink vehicle; a photoinitiator; and an optional colorant upon a print region surface; successively depositing additional amounts of the ink composition to create a three-dimensional object; and curing the ink composition.

Curing of the ink can be effected by exposure of the ink image to actinic radiation at any desired or effective wavelength, in one embodiment at least about 200 nanometers, and one embodiment no more than about 480 nanometers, although the wavelength can be outside of these ranges. Exposure to actinic radiation can be for any desired or effective period of time, in one embodiment for at least about 0.2 second, in another embodiment for at least about 1 second, and in yet another embodiment for at least about 5 seconds, and in one embodiment for no more than about 30 seconds, and in another embodiment for no more than about 15 seconds, although the exposure period can be outside of these ranges. By curing is meant that the curable compounds in the ink undergo an increase in molecular weight upon exposure to actinic radiation, such as (but not limited to) crosslinking, chain lengthening, or the like.

The printed object can be cured by exposure to radiation, in embodiments ultraviolet radiation, at any point in the fabrication process resulting in robust objects with a high degree of mechanical strength. In specific embodiments herein, the radiation curable phase change gellant inks can be cured after deposition of each layer of the three-dimensional object is deposited if desired. Alternately, in the interest of time, the inks can be cured upon completion of deposition of all layers of the three-dimensional object.

The ink compositions can be prepared by any desired or suitable method. For example, the ink ingredients can be mixed together, followed by heating, to a temperature in one embodiment of at least about 80°C, and in one embodiment of no more than about 120°C, although the temperature can be outside of these ranges, and stirring until a homogeneous ink composition is obtained, followed by cooling the ink to ambient temperature (typically from about 20°C to about 25°C). The inks are solids or gels at ambient temperature.

In embodiments, a method for preparing a curable phase change gellant ink composition comprises combining a phase change ink vehicle comprising at least one acrylate monomer, oligomer, or prepolymer; at least one gellant, wherein the gellant is miscible with the phase change ink vehicle; a photoinitiator; and an optional colorant.

The ink compositions, as well as the methods herein, can be employed with any desired printing system including systems suitable for preparing three-dimensional objects, such as a solid object printer, thermal ink jet printer (both with inks liquid at room temperature and with phase change inks), piezoelectric ink jet printer (both with inks liquid at room temperature and with phase change inks), acoustic ink jet printer (both with inks liquid at room temperature and with phase change inks), thermal transfer printer, gravure printer, electrostatographic printing methods (both those employing dry marking materials and those employing liquid marking materials), and the like. In alternate embodiments, the ink materials can be used for manual preparation of three-dimensional objects, such as through the use of molds or by manual deposition of the ink material, to prepare a desired three-dimensional object.

The present disclosure encompasses fabrication of objects ranging from extremely small objects to extremely large objects. For example, objects of from about 1 micrometer to about to about 10,000 micrometers in height or longest dimension can be prepared, although the height is not limited to these ranges. An appropriate number of passes or ink jettings may be selected so that object can be built up to a desired total print height and a desired shape.

In three-dimensional printing, the printhead or target stage is movable in three dimensions, x, y, and z, enabling the buildup of an object of any desired size. There are no limits to the height or overall size of an object that can be created; however, very large objects may require intermediate curing in the deposition process. In building up an image, for example by way of multiple passes of the print head over the portions of the image to include raised images, by depositing successive layers of ink so that the object, or a section of the object has a desired print height and geometry.

The ink jet head may support single color or full color printing. In full color printing, the ink jet head typically includes different channels for printing the different colors. The ink jet head may include four different sets of channels, for example one for each of cyan, magenta, yellow and black. In such embodiments, the print head is capable of printing either full color regular height prints when the ink jet head is set at a minimum distance from the print region surface, or raised height prints of any color when the ink jet head is at a distance greater than the minimum distance from the print region surface.

For example, the three dimensional objects can be formed with appropriate multiple passing of the ink jet print head over an area to achieve the desired object height and geometry. Jetting of ink from multiple different ink jets of the ink jet head toward a same location of the image during a single pass may also be used to form raised height objects. In embodiments, each layer of ink may add from about 4 µm to about 15 µm in height to the image height. Knowing the total print height desired the appropriate number of passes or jettings may be readily determined.

A controller may then control the ink jet print head to deposit the appropriate amount and/or layers of ink at locations of the image so as to obtain the image with the desired print heights and overall geometries therein.

The three-dimensional objects prepared herein can be free standing parts or objects, rapid prototyping devices, raised structures on substrates, such as, for example, topographical maps, or other desired objects. Any suitable substrate, recording sheet, or removable support, stage, platform, and the like, can be employed for depositing the three-dimensional objects thereon, including plain papers such as XEROX® 4024 papers, XEROX® Image Series papers, Courtland 4024 DP paper, ruled notebook paper, bond paper, silica coated papers such as Sharp Company silica coated paper, JuJo paper, HAMMERMILL LASERPRINT® paper, and the like, glossy coated papers such as XEROX® Digital Color Gloss, Sappi Warren Papers LUSTROGLOSS®, and the like, transparency materials, fabrics, textile products, plastics, polymeric films, inorganic substrates such as metals and wood, as well as meltable or dissolvable substrates, such as waxes or salts, in the case of removable supports for free standing objects, and the like.

### EXAMPLES

The following Examples are being submitted to further define various species of the present disclosure. These Examples are intended to be illustrative only and are not intended to limit the scope of the present disclosure. Also, parts and percentages are by weight unless otherwise indicated.

Radiation curable gellant inks were prepared having targeted thermos/mechanical properties and ink spreading behavior.

### Comparative Example 1 and Examples 2-4

Comparative Example 1 and Examples 2-4 were prepared having the components as shown in Table 1 as follows.

**Table 1**

| | **Comparative Example 1 (No Gel Control)** | **Example 2** | **Example 3** | **Example 4** |
|---|---|---|---|---|
| **Component** | **Weight %** | **Weight %** | **Weight %** | **Weight %** |
| Isobornyl Acrylate (SR506A) | 21.6 | 21.6 | 21.6 | 21.6 |
| N-Acryloylmorpholine | 21.6 | 21.6 | 21.6 | 21.6 |
| Trifunctional Urethane Acrylate (CN989) | 18.43 | 10.55 | 12.75 | 15.13 |
| Epoxy Acrylate (CN120Z) | 10 | 10 | 10 | 10 |
| 2-Phenoxy Ethyl Acrylate (SR339) | 23.77 | 23.13 | 20 | 17.02 |
| Propoxylated Glyceryl Triacrylate (SR9020) | 1.4 | 1.4 | 1.4 | 1.4 |
| Irgacure® TPO | 1.4 | 1.4 | 1.4 | 1.4 |
| Irgacure® 184 | 1.8 | 1.8 | 1.8 | 1.8 |
| **Total Non**-**Gellant** | 100 | 91.48 | 90.55 | 89.95 |
| NC1052 Low Molecular Weight Gellant | 0 | 8.5 | 9.45 | 10.05 |
| **Total** | 100 | 100 | 100 | 100 |
| Jetting Temperature for 10 Centipoise | 85 | 75 | 83 | 90 |

Isobornyl acrylate (available from Sartomer Co. Inc. as SR506A.

N-Acryloylmorpholine available from Sigma-Aldrich® Corporation.
CN989: trifunctional aliphatic urethane acrylate oligomer available from Sartomer®.
CN120Z: difunctional bisphenol A based epoxy acrylate available from Sartomer®.
SR339: 2-phenoxyethyl acrylate, low volatility monofunctional, aromatic monomer available from Sartomer®.
SR9020: 3 mole propoxylated glyceryl triacrylate, trifunctional monomer, available from Sartomer®.
Irgacure®TPO: acyl phosphine oxide photoinitiator available from BASF.
Irgacure® 184: alpha hydroxy ketone photoinitiator available from BASF.
NC1052: Low molecular weight gellant of the formula

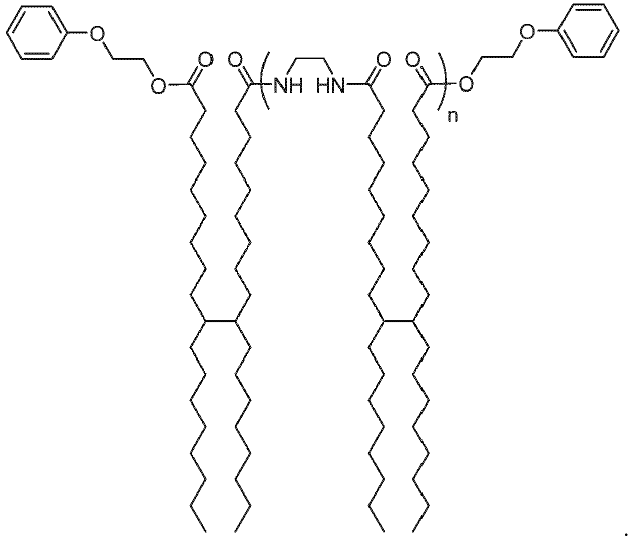

### Ink Rheology.

The rheological properties of the ultra-violet gellant inks were obtained using an Ares G2 Rheometer (TA Instruments) asper the following measurement protocol.

Temperature sweeps performed between 102 °C and 25 °C.

50 millimeter cone and plate, 0.0486 millimeters, 2° radian.

1.5 °C/minute.

12 seconds sampling time.

Iterative strain rate application.

### Control of Phase Change Properties Via Gellant(s) Incorporation.

In embodiments of the present ink compositions exhibit a latitude of the gel transition where similar performance is expected over a wider range of temperature below the gel point. Therefore, latitude is obtained with respect to concentration of the gelling agent in the ink. Jetting viscosity is adjusted with a non-reactive component of the ink with minimum impact of overall glass transition temperature and/or the heat deflection temperature.

### Examples 5, 6, 7, 8, 9,10,11,12, and 13

Examples 5, 6, and 7 are low molecular weight gellant inks having the composition as shown in Table 2.

**Table 2**

| | **Example 5** | **Example 6** | **Example 7** |
|---|---|---|---|
| **Component** | **Weight %** | **Weight %** | **Weight %** |
| Low molecular weight gellant | 2.5 | 5.0 | 7.50 |
| SR9003 (propoxylated neopentyl glycol diacrylate) | 89.0 | 86.5 | 84.0 |
| SR399LV (dipentaerythritol pentaacrylate) | 5.0 | 5.0 | 5.0 |
| Irgacure TPO (photoinitiator) | 1.5 | 1.5 | 1.5 |
| Irgacure 184 (photoinitiator) | 2.0 | 2.0 | 2.0 |
| TOTAL | 100 | 100 | 100 |
| Low molecular weight gellant | 2.5 | 5.0 | 7.50 |
| SR9003 (propoxylated neopentyl glycol diacrylate) | 89.0 | 86.5 | 84.0 |
| SR399LV (dipentaerythritol pentaacrylate) | 5.0 | 5.0 | 5.0 |
| Irgacure TPO (photoinitiator) | 1.5 | 1.5 | 1.5 |
| Irgacure 184 (photoinitiator) | 2.0 | 2.0 | 2.0 |
| TOTAL | 100 | 100 | 100 |

Examples 8, 9, and 10 are standard molecular weight gellant inks having the composition as shown in Table 3.

**Table 3**

| | **Example 8** | **Example 9** | **Example 10** |
|---|---|---|---|
| **Component** | **Weight** % | **Weight %** | **Weight %** |
| Standard molecular weight gellant | 2.5 | 5.0 | 7.50 |
| SR9003 (propoxylated neopentyl glycol diacrylate) | 89.0 | 86.5 | 84.0 |
| SR399LV (dipentaerythritol pentaacrylate) | 5.0 | 5.0 | 5.0 |
| Irgacure TPO (photoinitiator) | 1.5 | 1.5 | 1.5 |
| Irgacure 184 (photoinitiator) | 2.0 | 2.0 | 2.0 |
| TOTAL | 100 | 100 | 100 |

Examples 11, 12, and 13 are high molecular weight gellant inks having the composition as shown in Table 4.

**Table 4**

| | **Example 11** | **Example 12** | **Example 13** |
|---|---|---|---|
| **Component** | **Weight** % | **Weight %** | **Weight %** |
| High molecular weight gellant | 2.5 | 5.0 | 7.50 |
| SR9003 (propoxylated neopentyl glycol diacrylate) | 89.0 | 86.5 | 84.0 |
| SR399LV (dipentaerythritol pentaacrylate) | 5.0 | 5.0 | 5.0 |
| Irgacure TPO (photoinitiator) | 1.5 | 1.5 | 1.5 |
| Irgacure 184 (photoinitiator) | 2.0 | 2.0 | 2.0 |
| TOTAL | 100 | 100 | 100 |

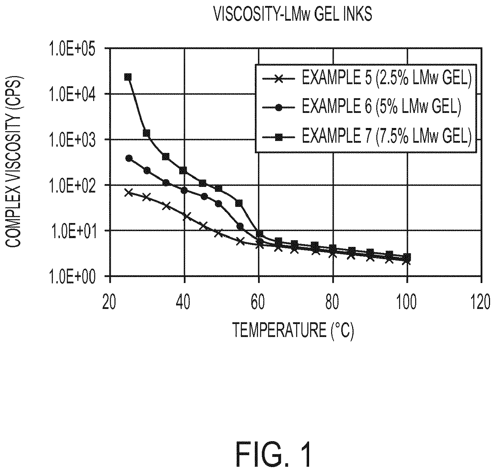

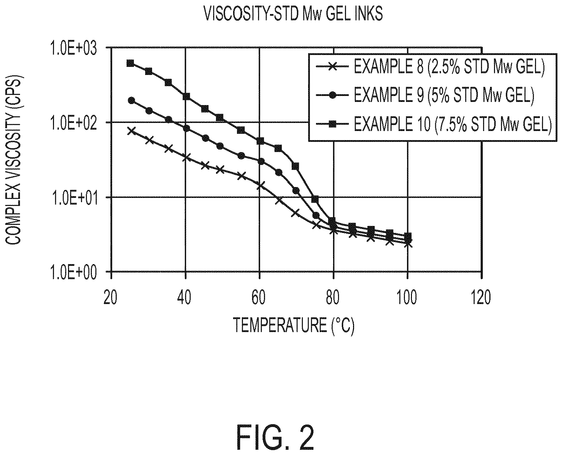

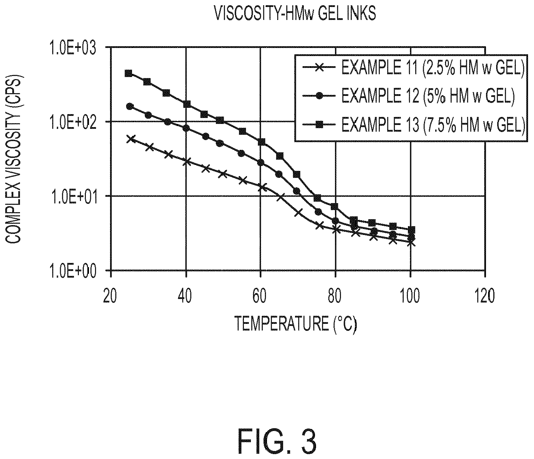

Figures 1, 2, and 3 are graphs showing complex viscosity (y-axis, centipoise) versus temperature (x-axis, °C) for the low molecular weight gellant inks (Figure 1), standard molecular weight gellant inks (Figure 2), and high molecular weight gellant inks (Figure 3), at 2.5, 5, and 7.5 percent loading, respectively. Figures 1, 2, and 3 illustrate strength and position of gel transition with type and/or content of gellant. Figure 1 shows the low molecular weight gellant inks of Examples 5, 6, and 7 at 2.5, 5, and 7.5 weight percent gellant loading. Figure 2 shows the standard molecular weight gellant inks of Examples 8, 9, and 10 at 2.5, 5, and 7.5 weight percent gellant loading. Figure 3 shows the high molecular weight gellant inks of Examples 11, 12, and 13 at 2.5, 5, and 7.5 weight percent gellant loading. Figures 1-3 indicate that targeted phase change temperatures are achieved via the type and content of gellant selected. Multiple gellant types may be mixed.

### Properties of Resulting Ink and Printed Objects.

Properties are summarized in Table 5 for printed objects prepared with ink Examples 2, 3, and 4 as compared to a commercial ink.

**Table 5**

| **Ink Sample** | **Commercial Ink*** | **Example 2** | **Example 3** | **Example 4** |
|---|---|---|---|---|
| **Property** | | | | |
| Gel Onset Temperature (°C) | -- | 42 | 43 | 46 |
| Tan δ at 60 °C | 0.12 | 0.20 | 0.16 | 0.13 |
| G" at 60 °C/MPa | 169 | 403 | 344 | 222 |

| | | | | |
|---|---|---|---|---|
| *Commercial Ink: Visijet® Clear Ink available from 3DSystems®. | | | | |

Gel onset temperature, Tan δ, and G" were measured by DMA (dynamic mechanical analysis).

### Three-Dimensional Print Resolution.

Prints of the ink of Example 4 were prepared at 50 layers thick, with approximately 20 micrometer layer thickness, for a final object thickness of about 1millimeter. The substrate was a plasma-treated glass plate. Print resolution was 300 x1800dpi, and cured with a Phoseon™ Fireline™ UV-LED module operating at 100% power.

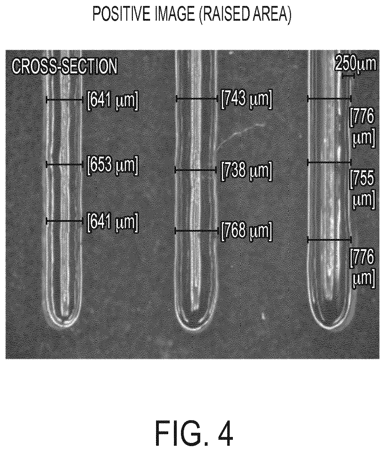

Figure 4 is an illustration of the ink of Example 4 printed as a positive image (lines) at 23 °C (left side) and 85 °C (right side).

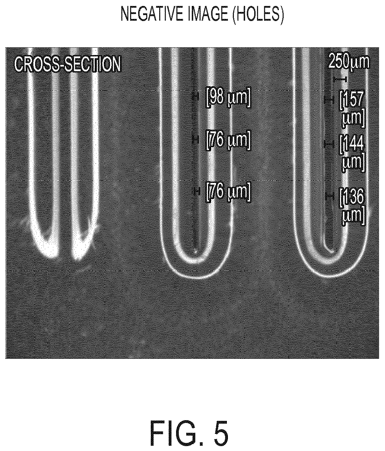

Figure 5 is an illustration of the ink of Example 4 printed as a negative image (holes) at 23 °C (left side) and 85 °C (right side).

In Figures 4 and 5, it was seen that when the build temperature is below the gel transition temperature (about 40°C for this ink embodiment), both positive and negative 'free-standing' features demonstrate markedly better resolution as measured by fineness of feature resolved, by comparison to ink which is free flowing and does not undergo a gel transition to a highly viscous state.

Table 6 shows a comparison of line versus hole widths for a commercial ink versus the ink of Example 4 of the present embodiments.

**Table 6**

| | **Commercial Ink*** | | **Gellant Ink Example 4** | |
|---|---|---|---|---|
| | **23 °C** | **90 °C** | **23 °C** | **85 °C** |
| **Positive Image** (**Lines**)** | | | | |
| 1 Pixel (microns) | 522 | 780 | 225 | 645 |
| 2 Pixel (microns) | 586 | 1153 | 308 | 750 |
| 3 Pixel (microns) | 698 | 1039 | 362 | 769 |

| **Negative Image** (**Holes**)*** | | | | |
|---|---|---|---|---|
| 1 Pixel (microns) | Filled | Filled | Filled | Filled |
| 2 Pixel (microns) | 76 | Filled | 83 | Filled |
| 3 Pixel (microns) | 74 | Filled | 146 | 35 |
| | | | | |
| **Gel Ink Lines** | **23 °C** | | 2X Narrower | |
| | **85 °C** | | 1.4 X Narrower | |
| **Gel Ink Holes** | **23 °C** | | 3 Pixel 2 X Wider | |
| | **85 °C** | | N/A | |

| | | | | |
|---|---|---|---|---|
| *Commercial Ink: Visijet® Clear Ink available from 3DSystems®. *Narrow lines = better resolution. **Wider holes = better resolution. | | | | |

Table 6 compares the gellant ink of Example 4 to a commercial ink, at both room temperature (23°C) and steady state temperature (85-90°C). While at elevated temperatures, there is an improvement of features of the gel ink of Example 4 compared to the commercial ink (owing to slightly higher viscosity), the difference between the commercial and gel ink of Example 4 is marked at 23°C. The resolution features are improved by two times at a temperature below the gel transition.

Also of note is that the steady state temperature is lower for the gel ink of Example 4 compared with the commercial ink (85 °C compared with 90 °C), an indication of lower heat of polymerization due to a lowered content of polymerizable material. The property is desirable for three-dimensional printing to better manage heat evolution.

Thus, a high resolution ink composition is provided, in embodiments, wherein the ink composition comprises about 5 to about 25 percent by weight gellant, based on the total weight of the ink composition, which is particularly suited for printing three-dimensional objects wherein ink spreading upon three-dimensional printing is reduced.

In embodiments, the ink compositions are suitable for jetting at a temperature of from about 60 °C to about 100 °C.

In embodiments, the change in the monomers and oligomers specific to 3D printed inks meant a change in the selection of the molecular weight fraction of the gellant to enable complete miscibility.

Miscibility between gellants and photopolymerizable components is characterized by high gel strength. In embodiments, high gel strength is demonstrated by a steep viscosity decrease from great than 1 X 10³ centipoise at less than about 25 °C to about 5 to about 20 centipoise at jetting temperature, where the gel transition occurs between from about 30 °C to about 90 °C, with a preference for a gel transition at from about 40 °C to about 70 °C.

Resulting cured objects prepared with the present inks are stable to required post-processing steps including temperature increases. The Tan delta of the resulting, cured objects is from about 0.1 to about 0.4 at about 60 °C, which enables post-processing and thermal dampening of the part. The loss modulus of the resulting, cured objects is from about 200 to about 600 MPa at about 60 °C, to dissipate sufficient energy as heat.

In embodiments, the three-dimensional ink compositions contain mixtures of five or more acrylates, wherein the ratio of triacrylate to mono- and di-acrylates is between about 0.05 and 0.5, or between about 0.07 and about 0.4, or between about 0.1 and about 0.3, and the ratio of gellant to trifunctional acrylate is between about 0.8 to about 4, or between about 0.6 to about 2, or between about 0.5 to about 1.5, and wherein the total amount of triacrylate and gellant does not exceed about 35 percent by weight based on the total weight of the ink composition. In embodiments, the at least one acrylate monomer, oligomer, or prepolymer comprises a triacrylate, and the total amount of triacrylate and gellant combined is about 35 percent by weight or less based on the total weight of the ink composition.

In embodiments, phase change properties can be controlled by the type and/or the molecular weight of the gellant or mixtures of gellant for control of spreading properties at intermediate temperatures between the jetting temperature and the object build temperature.

The compatibility of the gellant in the ink composition may be increased or decreased. By selecting alternative end groups, R1, the polarity of the oligomeric gellant can be affected, particularly for the lower molecular weight materials. By changing the polar and hydrogen bonding characteristics of the gellant, the spreading properties of the inks can be fine-tuned.

In embodiments, lower heat of polymerization during the curing process is achieved due to miscible gellant replacing photocurable monomer/oligomer in the ink composition, which also lowers the degree of curing required.

Compared to commercial ink that does not contain gellant, spreading may be decreased two times when the build temperature is below that of the gel transition temperature.

The ink composition herein enables the ability to print fine features without the use of support material, alleviating difficulties arising due to supports which are difficult to melt or wash out from small crevices.

It will be appreciated that various of the above-disclosed and other features and functions, or alternatives thereof, may be desirably combined into many other different systems or applications. Also that various presently unforeseen or unanticipated alternatives, modifications, variations or improvements therein may be subsequently made by those skilled in the art which are also intended to be encompassed by the following claims. Unless specifically recited in a claim, steps or components of claims should not be implied or imported from the specification or any other claims as to any particular order, number, position, size, shape, angle, color, or material.

## Claims

1. A curable phase change gellant ink composition comprising:
a phase change ink vehicle comprising at least one acrylate monomer, oligomer, or prepolymer;
acryloylmorpholine;
at least one gellant, wherein the gellant is miscible with the phase change ink vehicle;
a photoinitiator; and
an optional colorant.

2. The ink composition of Claim 1, wherein the phase change ink vehicle comprises at least one triacrylate, at least one monoacrylate, and at least one diacrylate; and
wherein the ratio of triacrylate to monacrylate and diacrylate is from about 0.05 to about 0.5.

3. The ink composition of Claim 1, wherein the at least one acrylate monomer, oligomer, or prepolymer is selected from the group consisting of trifunctional aliphatic urethane acrylate oligomer, epoxy acrylate, 2-phenoxy ethyl acrylate, acrylate, propoxylated glyceryl triacrylate, triethylene glycol diacrylate, tetraethylene glycol diacrylate, and combinations thereof.

4. The ink composition of Claim 1, wherein the gellant is a compound of the formula 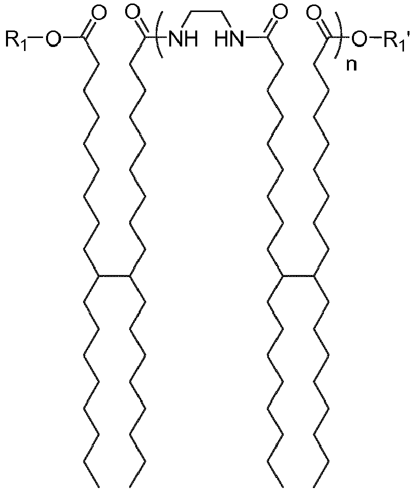 wherein R1 and R1' are each, independently of the other, selected from the group consisting of

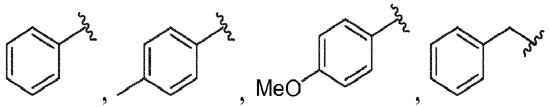

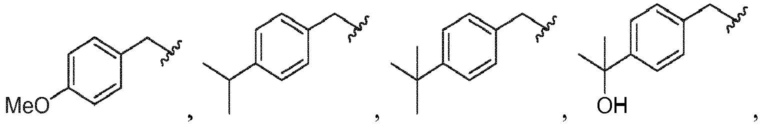

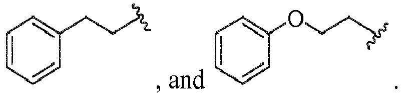

5. A method for fabricating a three-dimensional object comprising:
depositing a first amount of a curable phase change gellant ink composition comprising a phase change ink vehicle comprising at least one acrylate monomer, oligomer, or prepolymer; acryloylmorpholine; at least one gellant, wherein the gellant is miscible with the phase change ink vehicle; a photoinitiator; and an optional colorant upon a print region surface;
successively depositing additional amounts of the ink composition to create a three-dimensional object; and
curing the ultraviolet curable phase change ink composition.

6. The method of Claim 5, wherein the at least one acrylate monomer, oligomer, or prepolymer is selected from the group consisting of trifunctional aliphatic urethane acrylate oligomer, epoxy acrylate, 2-phenoxy ethyl acrylate, acrylate, propoxylated glyceryl triacrylate, triethylene glycol diacrylate, tetraethylene glycol diacrylate, and combinations thereof.

7. The method of Claim 5, wherein the gellant is a compound of the formula 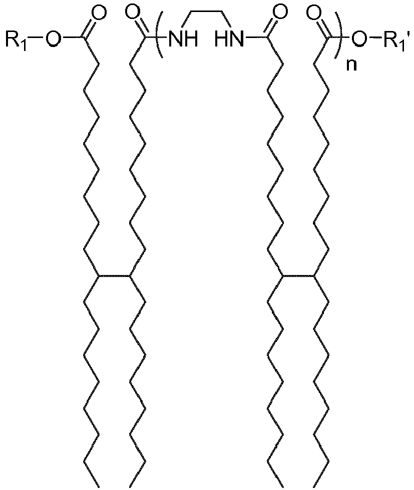 wherein R1 and R1' are each, independently of the other, selected from the group consisting of

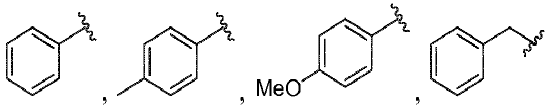

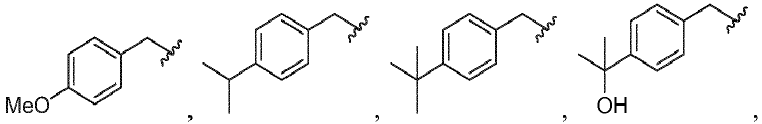

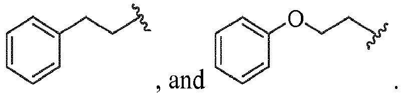

8. A method for preparing a curable phase change gellant ink composition comprising:
combining a phase change ink vehicle comprising at least one acrylate monomer, oligomer, or prepolymer;
acryloylmorpholine;
at least one gellant, wherein the gellant is miscible with the phase change ink vehicle;
a photoinitiator; and
an optional colorant.

9. The method of Claim 8, wherein the at least one gellant is a low molecular weight gellant having a molecular weight of from about 1,000 to about 2,500 grams per mole.

10. The method of Claim 8, wherein the at least one gellant is present in an amount of from about 5 to about 25 percent by weight based upon the total weight of the ink composition.
